# FASCICULE DE BREVET EUROPEEN

(11) **EP 0 500 012 B1**
(45) Date de publication et mention de la délivrance du brevet: **04.01.1995**
(21) Numéro de dépôt: 92102601.9
(22) Date de dépôt: 17.02.1992
(51) Int. Cl.: F16F 1/38, F16F 1/36, B64C 27/51

(54) **Procédé de réalisation d'un adaptateur de fréquence**
Herstellungsverfahren eines Frequenzadapters
Manufacturing process for a frequency adaptor

(30) Priorité: 19.02.1991 FR 9101941
(43) Date de publication de la demande: 26.08.1992
(73) Titulaire: VIBRACHOC, Société Anonyme dite:, F-91028 Evry Cédex (FR)
(72) Inventeur: De Antonio, Richard, F-91080 Courcouronnes (FR); Lacarrière, Didier, F-91780 Chalo St. Mars (FR)
(74) Mandataire: Weinmiller, Jürgen

(56) Documents cités:
- DE-U- 7 327 342
- GB-A- 732 456
- PATENT ABSTRACTS OF JAPAN vol. 14, no. 388 (M-1014)(4331) 22 Août 1990
- PATENT ABSTRACTS OF JAPAN vol. 12, no. 432 (M-763)(3279) 15 Novembre 1988

## Description

La présente invention concerne un procédé de réalisation d'un adaptateur de fréquence. On entend par adaptateur de fréquence un dispositif qui filtre et amorti des vibrations. L'adaptateur de fréquence est ainsi placé entre deux pièces dont l'une est soumise, ou est source elle-même, de vibrations.

L'invention s'applique à un adaptateur de fréquence du type cylindrique comprenant au moins un ensemble formé par une bague en élastomère moulée entre une armature interne et une bague cylindrique, ladite bague en élastomère adhérant à l'armature et à la bague cylindrique, ledit ensemble, ou lesdits ensembles, étant emmanché dans un fourreau externe.

Si l'adaptateur est constitué d'un seul dit ensemble, l'une des pièces entre lesquelles il est situé est fixée à l'armature interne et l'autre au fourreau externe. Cependant, l'adaptateur peut être constitué de deux ensembles alignés et alors dans ce cas, l'une des pièces est fixée à l'armature interne de l'un des ensembles et l'autre à l'armature interne de l'autre ensemble, le fourreau externe servant alors de liaison entre les deux ensembles.

Lors du refroidissement d'un tel ensemble, après le moulage de la bague en élastomère, il se crée des contraintes résiduelles dans la bague en élastomère à cause du retrait au refroidissement. Ces contraintes doivent être éliminées afin d'éviter des ruptures d'adhésion et parce que de telles contraintes, en tout état de cause, diminuent la durée de vie de l'adaptateur par suite de fatigue accrue. Pour éliminer ces contraintes, il est connu d'effectuer une opération de rétreint consistant à diminuer le diamètre de l'élément, au moyen d'un outillage connu. Cette opération consiste en une déformation au-delà de la limite élastique, donc une déformation plastique. Cependant, au cours de cette opération, la bague cylindrique, dont le diamètre a diminué, est cependant déformée et n'est plus parfaitement circulaire, il est donc nécessaire de réusiner l'ensemble après l'opération de rétreint afin de le rendre bien circulaire et de lui donner la cote définitive, avant de l'emmancher dans le fourreau externe.

La présente invention a pour but d'éviter un tel usinage et en outre simplifie l'opération d'emmanchement de l'ensemble dans le fourreau externe.

L'invention a ainsi pour objet un procédé de réalisation d'un adaptateur de fréquence du type cylindrique comprenant au moins un ensemble formé par une bague en élastomère moulée entre une armature interne et une bague cylindrique, ladite bague en élastomère adhérant à l'armature et à la bague cylindrique, ledit, ou lesdits, ensemble étant emmanché dans un fourreau externe, caractérisé par le fait qu'après le moulage de la bague en élastomère entre ladite armature interne et ladite bague cylindrique et le refroidissement de l'ensemble ainsi formé, et sans procéder à aucune opération de rétreint, on effectue l'emmanchement dudit ensemble dans ledit fourreau externe et que l'on effectue ensuite seulement une opération de rétreint du diamètre de l'adaptateur complet par déformation plastique du fourreau externe. L'invention va maintenant être décrite en se référant au dessin annexé dans lequel :
La figure 1 représente un adaptateur de fréquence qui peut être réalisé selon le procédé de l'invention.
La figure 2 montre une autre réalisation d'un adaptateur de fréquence où le procédé selon l'invention est également applicable.

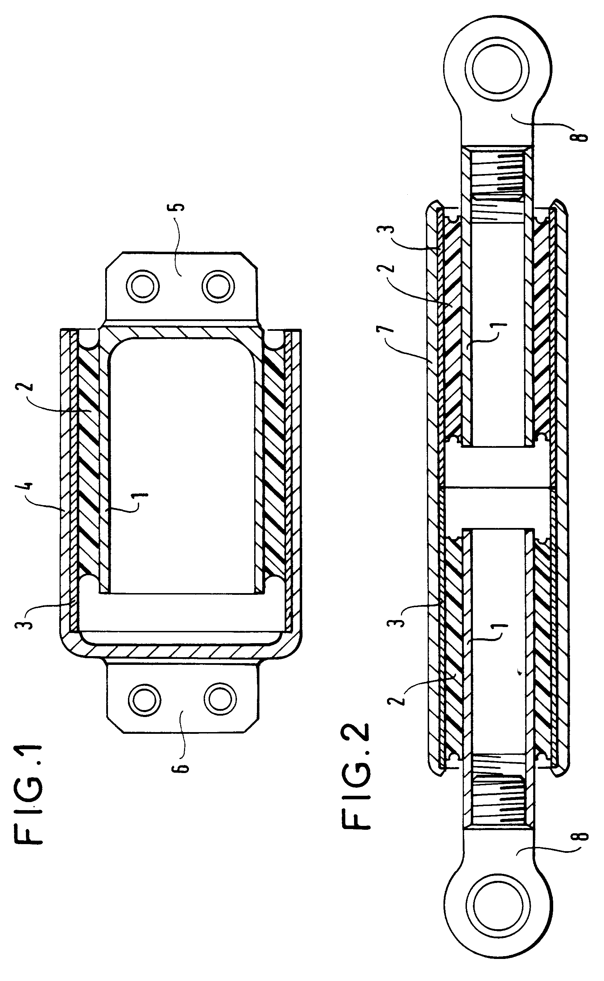

En se référant à la figure 1, on voit un adaptateur de fréquence qui comprend une armature interne 1, une bague en élastomère 2 qui entoure l'armature 1, une bague cylindrique 3 autour de la bague en élastomère 2 et enfin, qui recouvre le tout, un fourreau externe 4.

L'adaptateur est fixé entre deux pièces dont l'une est soumise à des vibrations ou est source elle-même de vibrations. L'une des deux pièces est fixée à l'armature interne 1 qui comporte une patte de fixation 5 et l'autre pièce est fixée au fourreau externe 4 qui comporte également une patte de fixation 6.

Lors de la réalisation de l'adaptateur, on moule à chaud et sous pression, selon un procédé classique, l'élastomère 2 entre l'armature interne 1 et la bague cylindrique 3. Bien entendu, avant le moulage, et de façon classique, l'armature interne 1 et la bague cylindrique 3 ont été revêtues d'un agent assurant, lors du moulage, l'adhésion ferme de l'élastomère à l'armature 1 et à la bague 3.

Après refroidissement de l'ensemble ainsi constitué, on emmanche cet ensemble dans le fourreau externe 4. Cet emmanchement est effectué sans nécessiter de serrage. Une fois l'emmanchement effectué, et afin de supprimer les contraintes résiduelles dans la bague en élastomère 2 créées lors du refroidissement après le moulage, on effectue une opération de rétreint de l'ensemble de l'adaptateur par déformation plastique du fourreau externe diminuant son diamètre et celui de la bague cylindrique 3 libérant ainsi les tensions dans la bague en élastomère.

La déformation de la bague cylindrique 3 peut n'être qu'élastique, son diamètre étant maintenu par le fourreau externe qui lui, subi une déformation plastique.

Cette opération de rétreint assure en même temps, et d'une façon aisée le serrage du fourreau externe sur l'ensemble bague cylindrique 3, bague élastomère 2 et armature interne 1.

Ainsi, selon l'invention, en effectuant l'opération de rétreint après l'assemblage complet de l'ensemble dans le fourreau externe et non pas directement sur l'ensemble, on évite les opérations d'usinage sur cet ensemble. En outre le serrage, entre le fourreau extérieur et l'ensemble, est effectué par la même occasion, ce qui permet lors du montage de l'ensemble dans le fourreau externe de l'effectuer avec un glissement non serré ou même avec un léger jeu.

Après l'opération de rétreint effectuée sur l'adaptateur complet, il n'est pas nécessaire d'effectuer une opération d'usinage car il s'agit d'une surface externe dont la cylindricité circulaire parfaite n'est pas nécessaire.

La figure 2 montre un autre exemple d'adaptateur de fréquence où le procédé de l'invention est applicable.

Dans cette figure, on a deux ensembles comprenant chacun une armature interne 1, une bague en élastomère 2 et une bague cylindrique 3. Les deux ensembles sont alignés et entourés d'un unique fourreau externe 7. Ici, les deux pièces à relier à l'adaptateur sont fixées l'une à l'armature interne 1 de l'un des éléments par une attache 8 et l'autre à l'armature interne de l'autre élément par une attache 8 et le fourreau externe 7 ne sert qu'à la liaison des deux ensembles. Comme dans l'exemple précédent, une fois chaque ensemble refroidi, après le moulage de l'élastomère, les ensembles sont introduits dans le fourreau externe 7 et on effectue alors l'opération de rétreint.

De tels adaptateurs peuvent être utilisés, par exemple, comme adaptateur de fréquence pour un rotor d'hélicoptère et les adaptateurs sont alors disposés, soit entre chaque pale et le rotor, soit pour relier deux pales consécutives. L'invention, cependant ne se restreint pas à cette application, mais peut s'appliquer à tout adaptateur de fréquence de type cylindrique.

## Revendications

1. Procédé de réalisation d'un adaptateur de fréquence du type cylindrique comprenant au moins un ensemble formé par une bague en élastomère (2) moulée entre une armature interne (1) et une bague cylindrique (3), ladite bague en élastomère (2) adhérant à l'armature (1) et à la bague cylindrique (3), ledit, ou lesdits ensembles, étant emmanché dans un fourreau externe (4, 7), caractérisé par le fait qu'après le moulage de la bague en élastomère (2) entre ladite armature interne (1) et ladite bague cylindrique (3) et le refroidissement de l'ensemble ainsi formé, et sans procéder à aucune opération de rétreint, on effectue l'emmanchement dudit ensemble dans ledit fourreau externe (4, 7) et que l'on effectue ensuite seulement une opération de rétreint du diamètre de l'adaptateur complet, par déformation plastique du fourreau externe (4, 7) provoquant également une diminution du diamètre de la bague cylindrique (3).

## Claims

1. Method of manufacturing a cylindrical type frequency adapter comprising at least one assembly in the form of an elastomer ring (2) molded between an inner armature (1) and a cylindrical ring (3), said elastomer ring (2) adhering to the armature (1) and to the cylindrical ring (3), wherein said assembly or each of said assemblies is sleeved into an outer sheath (4, 7), characterised in that, after said elastomer ring (2) is molded between said inner armature (1) and said cylindrical ring (3) and the resulting assembly is cooled, without carrying out any diameter reducing operations, said assembly is sleeved into said outer sheath (4, 7) after which the diameter of the complete adapter is reduced by plastic deformation of said outer sheath (4, 7) which also reduces the diameter of the cylindrical ring (3).

## Patentansprüche

1. Verfahren zur Herstellung eines Frequenzadapters zylindrischer Art, der mindestens eine Einheit aufweist, die von einem gegossenen Elastomerring (2) gebildet wird, der zwischen einer inneren Armatur (1) und einem zylindrischen Ring (3) liegt, wobei der Elastomerring (2) an der Armatur (1) und an dem zylindrischen Ring (3) haftet und wobei die Einheit oder die Einheiten in eine äußere Hülse (4, 7) eingeschoben sind, dadurch gekennzeichnet, daß nach dem Gießen des Elastomerrings (2) zwischen der inneren Armatur (1) und dem zylindrischen Ring (3) und der Abkühlung der so gebildeten Einheit und ohne jeden Schrumpfvorgang diese Einheit in die äußere Hülse (4, 7) eingeschoben wird und daß erst danach der Durchmesser des vollständigen Adapters durch plastische Verformung der äußeren Hülse (4, 7) geschrumpft wird, was auch eine Verringerung des Durchmessers des zylindrischen Rings (3) bewirkt.
